# EUROPEAN PATENT APPLICATION

(11) **EP 4 699 835 A1**
(43) Date of publication of application: **25.02.2026**
(21) Application number: 24791963.2
(22) Date of filing: 15.04.2024
(51) Int. Cl.: B60J 3/04, G02F 1/133, G01C 1/00

(54) **PHOTOSENSITIVE SYSTEM, DIMMING SYSTEM AND METHOD, LIGHT SENSING DEVICE, AND STORAGE MEDIUM**

(30) Priority: 19.04.2023 CN 202310423615
(71) Applicant: Boe Technology Group Co., Ltd., Beijing 100015 (CN); Beijing BOE Optoelectronics Technology Co., Ltd., Beijing 100176 (CN)
(72) Inventor: PANG, Xiaotian, Beijing 100176 (CN)
(74) Representative: CMS Cameron McKenna Nabarro Olswang LLP
(86) International application number: PCT/CN2024/087748
(87) International publication number: WO 2024/217378

(57) **Abstract**

A photosensitive system, a dimming system and method, and a storage medium. The photosensitive system is applied to a dimmable window, the dimmable window comprising at least one dimming function area. The photosensitive system comprises a light sensing device and a dimming control device, the dimming control device being configured to be connected to the dimmable window, wherein the light sensing device is configured to sense the projection of a light source, and the dimming control device is configured to determine, according to the projection of the light source, a trigger area, determine a corresponding dimming function area according to the trigger area, and send a driving signal to the dimming function area so as to change the light transmittance of the dimming function area.

## Description

The present application claims priority of Chinese patent application No. 202310423615.4, filed to the CNIPA on April 19, 2023 and entitled "Photosensitive System, Dimming System and Method, Light Sensing Device, and Storage Medium", contents of which should be understood to be incorporated into the present application by reference.

### Technical Field

Embodiments of the present disclosure relate to, but are not limited to, the field of dimming technologies, and particularly relate to a photosensitive system, a dimming system, a dimming method, a light sensing device, and a computer-readable storage medium.

### Background

Traditional sun visors are generally located above a driver seat and a front passenger seat, are completely opaque, and need to be adjusted by manual operation. Even in some cases, it is difficult for a driver to adjust a sun visor above the front passenger seat.

### Summary

The following is a summary of subject matters described herein in detail. This summary is not intended to limit the protection scope of claims.

Embodiments of the present disclosure provide a photosensitive system, a dimming system and method, a light sensing device, and a storage medium.

In one aspect, an embodiment of the present disclosure provides a photosensitive system, which is applied to a dimming window, the dimming window includes at least one dimming function region, the photosensitive system includes: a light sensing device and a dimming control device, and the dimming control device is configured to be connected with the dimming window.

The light sensing device is configured to sense a projection of a light source.

The dimming control device is configured to determine a trigger region according to the projection of the light source, to determine a corresponding dimming function region according to the trigger region, and to transmit a drive signal to the dimming function region to change a light transmittance of the dimming function region.

In another aspect, an embodiment of the present disclosure also provides a dimming system, the dimming system includes the photosensitive system as described above and a dimming window, the dimming window includes at least one dimming function region, and the dimming function region is configured to change a light transmittance according to a drive signal transmitted by the dimming control device.

In another aspect, an embodiment of the present disclosure also provides a dimming method, which is applied to a logic processor and is used for controlling a dimming window, the dimming window includes at least one dimming function region. The method includes:
determining a trigger region according to a received signal of an optical sensor, wherein the signal of the optical sensor is triggered by a projection of a light source; and
determining a corresponding dimming function region to be dimmed according to the trigger region, and transmitting a control signal to the dimming function region, the control signal is used for driving the dimming function region to change a light transmittance.

In another aspect, an embodiment of the present disclosure also provides a light sensing device, applied to a photosensitive system, the light sensing device includes a projection object and a light sensing plate, a light sensing region is disposed on the light sensing plate, a light sensor is disposed in the light sensing region, the projection object is configured such that a projection of the projection object is obtained under illumination of the light source, and the light sensing region is configured to sense the projection of the projection object.

In another aspect, an embodiment of the present disclosure also provides a computer-readable storage medium having stored a computer program executable on a processor, when the computer program is executed by the processor, the aforementioned dimming method is implemented.

Of course, an implementation of any product or method in the embodiments of the present disclosure does not need to achieve all the advantages mentioned above at the same time. Other features and advantages of the present disclosure will be set forth in the following embodiments of the description, and in part will become apparent from the embodiments of the description, or be learned by practice of the present disclosure. Purposes and other advantages of the embodiments of the present disclosure may be achieved and acquired by structures specified in the detailed description, claims and drawings.

Other aspects of the present disclosure may be comprehended after drawings and detailed description are read and understood.

### Brief Description of Drawings

Accompanying drawings are intended to provide a further understanding of technical solutions of the present disclosure and form a part of the specification, and are used to explain the technical solutions of the present disclosure together with embodiments of the present disclosure, but do not form limitations on the technical solutions of the present disclosure. Shapes and sizes of various components in the drawings do not reflect actual scales, but are only intended to schematically illustrate contents of the present disclosure.
FIG. 1 is a schematic diagram of a photosensitive system according to an embodiment of the present disclosure.
FIG. 2 is an example in which each light sensing region corresponds to one incident direction of a light source according to an embodiment of the present disclosure.
FIG. 3 is an example in which each light sensing sub-region corresponds to one light source height according to an embodiment of the present disclosure.
FIG. 4 is a schematic diagram of a dimming control device according to an embodiment of the present disclosure.
FIG. 5 is a schematic diagram of a signal processor according to an embodiment of the present disclosure.
FIG. 6 is a schematic diagram of a dimming driver according to an embodiment of the present disclosure.
FIG. 7 is a flowchart of a dimming method according to an embodiment of the present disclosure.
FIG. 8 is a schematic diagram of an application example of a dimming system according to the present disclosure.
FIG. 9A is a top view of a light sensing device in an application example.
FIG. 9B is a side view of a light sensing device in an application example.
FIG. 10 is a circuit diagram of a signal processor in an application example.
FIG. 11A is an example of an incident direction of a light source.
FIG. 11B is an example of another incidence direction of a light source.
FIG. 12 is a circuit diagram of a dimming control device in an application example.
FIG. 13 is a circuit diagram of an SPWM wave driving a full-bridge circuit to generate a sinusoidal drive signal.
FIG. 14 is a signal timing diagram in the circuit shown in FIG. 11.
FIG. 15 is a schematic diagram of connection between a front windshield window and a dimming driver.
FIG. 16 is a schematic diagram of connection of drive signal lines of one dimming partition.

### Detailed Description

Multiple embodiments are described in the present disclosure. However, the description is exemplary and unrestrictive. Moreover, it is apparent to those of ordinary skills in the art that there may be more embodiments and implementation solutions in the scope of the embodiments described in the present disclosure. Although many possible combinations of features are shown in the drawings and discussed in the implementations, many other combinations of the disclosed features are also possible. Unless expressly limited, any feature or element of any embodiment may be used in combination with, or may replace, any other feature or element in any other embodiment.

The present disclosure includes and conceives combinations with the features and elements known to those of ordinary skills in the art. The embodiments, features, and elements that have been disclosed in the present disclosure may also be combined with any conventional feature or element to form unique inventive solutions defined by the claims. Any feature or element of any embodiment may also be combined with a feature or an element from another inventive solution to form another unique inventive solution defined by the claims. Therefore, it should be understood that any of the features shown and/or discussed in the present disclosure may be implemented alone or in any suitable combination. Therefore, the embodiments are not to be limited except the limitations by the appended claims and equivalents thereof. Furthermore, various modifications and variations may be made within the protection scope of the appended claims.

Moreover, when describing representative embodiments, the specification may have presented a method and/or a process as a particular sequence of acts. However, to an extent that the method or the process does not depend on the specific sequence of the acts described herein, the method or the process should not be limited to the acts with the specific sequence. Those of ordinary skills in the art will understand that other sequences of acts may also be possible. Therefore, the specific sequence of the acts illustrated in the specification should not be interpreted as a limitation on claims. Moreover, claims directed to the method and/or process should not be limited to performing their acts in a described sequence, and those skilled in the art may readily understand that these sequences may be varied and still remain within the essence and scope of the embodiments of the present disclosure.

Unless otherwise defined, technical terms or scientific terms used in the present disclosure have the same meanings as commonly understood by those of ordinary skills in the art to which the present disclosure belongs. The term "first", "second" and similar terms used in the present disclosure do not indicate any order, quantity, or importance, but are used only for distinguishing different components. In the present disclosure, "a plurality of" may refer to two or more than two. A word such as "include" or "contain" means that an element or object appearing before the word includes an element or object listed after the word or its equivalents and does not exclude another element or object.

In order to keep following description of the embodiments of the present disclosure clear and concise, detailed description of part of known functions and known components are omitted in the present disclosure. The drawings of the embodiments of the present disclosure only involve structures involved in the embodiments of the present disclosure, and for other structures, reference may be made to conventional designs.

As mentioned above, a traditional sun visor is generally located above a driver seat and a front passenger seat, which is completely opaque and requires manual adjustment. Even in some cases, it is difficult for a driver to adjust a sun visor above the front passenger seat. Therefore, the applicant provides a system capable of automatically sensitizing and dimming light, but this system may be used not only in a passenger vehicle scenario, but also in other similar scenarios where sensitizing and dimming are required.

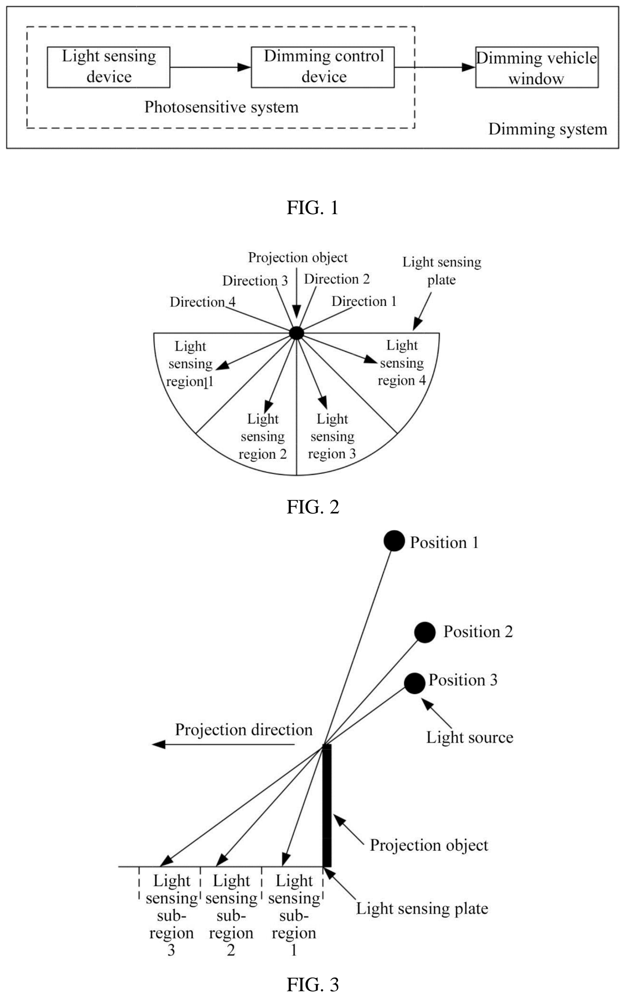

FIG. 1 is a schematic diagram of a photosensitive system according to an embodiment of the present disclosure, as shown in the figure, which is applied to a dimming window, the dimming window includes at least one dimming function region, the photosensitive system of the present embodiment includes a light sensing device and a dimming control device, and the dimming control device is configured to be connected with the dimming window.

The light sensing device is configured to sense a projection of a light source.

The dimming control device is configured to determine a trigger region according to the projection of the light source, to determine a corresponding dimming function region according to the trigger region, and to transmit a drive signal to the dimming function region to change a light transmittance of the dimming function region. The dimming function region will change the light transmittance according to the drive signal transmitted by the dimming control device. A region where the projection of the light source is located is considered to be the trigger region, that is, a region where dimming can be triggered.

In this example, a trigger region is determined by sensing a projection of a light source, a corresponding dimming function region is determined according to the trigger region, and a drive signal is transmitted to the dimming function region, thereby automatically changing a light transmittance of a dimming function region at a corresponding position, and automatically adjusting a light transmittance of a dimming window.

Changing the light transmittance of the dimming function region may be, for example, reducing the light transmittance of the dimming function region. In some scenarios, it may be increasing the light transmittance of the dimming function region, which may be set according to an application scenario.

The light source may be, for example, the sun. In other embodiments, the light source may be another light source, depending on different application scenarios. For example, when the photosensitive system is applied to a vehicle, the light source may also be a high beam from a vehicle traveling in an opposite direction. In addition to being applied to a vehicle, the system described in this document may also be used in a building, and the dimming window may be any window in the building that needs to be dimmed, which may protect indoor people or objects from influence of light or increase indoor light intensity. In other embodiments, the system may be applied to any location where dimming of the dimming window is needed due to illumination of a light source.

In an exemplary embodiment, that the light sensing device senses the projection of the light source may be: the light sensing device senses an incident direction of the light source relative to the light sensing device according to the projection of the light source. That is, when light at a specific angle is incident on the light sensing device, the dimming control device may be triggered to change a light transmittance of a preset dimming function region. When the system is applied to a vehicle, a specific angle of light may be set as light incident on a driver head in a cab (achieved by sensing the angle of light by the light sensing device), and then a light transmittance of a dimming function region located in a front windshield may be changed through the above system to avoid an influence of light on the driver. When the system is applied to a building, the building may be an ordinary residence, an office building, a shop, a hospital or a museum. When a light transmittance of a dimming function region is decreased after a projection of a light source is sensed, it may avoid people or objects in the building from being illuminated, and it is not excluded that the light transmittance of the dimming function region may be increased after the projection of the light source is sensed, and overall indoor brightness may be improved by external light.

In an exemplary embodiment, the light sensing device includes a projection object (or a shielding object) and a light sensing plate, a light sensing region is disposed on the light sensing plate, a light sensor is disposed in the light sensing region, the projection object is configured such that a projection of the projection object can be obtained under illumination of a light source, and the light sensing region is configured to sense the projection of the projection object. The projection described in this document is defined as follows, that is, when a shape of a projection object is projected onto the light sensing plate by light emitted by a light source, an image obtained on the light sensing plate may be called a projection or a shadow.

The projection object is an object having a certain height (to facilitate projection), for example, it may be a columnar structure, or may be achieved by utilizing an existing object (e.g. an ornament). A cross section of the projection object may be in a shape of a circle or a polygon such as a triangle or a quadrilateral, and may be a regular pattern or an irregular pattern, the present application is not limited thereto. A height of the projection object may be set as needed, and the present application is not limited thereto, as long as the projection can be performed in the light sensing region. A position of the projection object may be set as needed, for example, the projection object may be disposed at a center position, an edge position of the light sensing region, or outside the light sensing region, as long as the projection object can be projected on the light sensing region.

The light sensing plate may be in the form of a light sensing base, a light sensing disc, a light sensing substrate, or the like provided with a light sensing region. An overall shape of the light sensing plate may be, for example, in a shape of a circular, a semicircular, a sector, or a polygon such as a square or a rectangle, and the present application is not limited thereto. When there are a plurality of light sensing regions, the light sensing regions may be set in a regular shape so as to facilitate division. For example, the light sensing region may be arranged in a circumferential direction as a sector or a semicircle according to a direction for sensing a light source, and the direction for sensing the light source refers to a direction in which a shadow of the projection object can be sensed by the light sensing region when the projection object is illuminated by the light source. In an exemplary embodiment, the light sensing plate may be disposed as a sector (semicircle) with a central angle of 180 degrees, and the semicircle may be divided as a plurality of sector-shaped light sensing regions, and the projection object may be located at a circle center of the semicircle, that is, at the midpoint position of a diameter of the semicircle. The semicircular shape is set in consideration that a main angle of light felt by people in a vehicle or people or objects indoors is within 180 degrees, so that a range of light may be better felt. In other embodiments, a shape of the light sensing plate may be adjusted according to different application scenarios, and may be determined according to a range of felt light, for example, in an all-glass sunroom, the range (angle) of felt light is 360 degrees, the light sensing plate may be set to be circular.

One way for the light sensing region to sense the projection of the projection object is that the light sensor in the light sensing region determines whether a projection of the projection object is sensed according to a sensed change in light intensity. For example, a first sensing condition may be set in advance, and when the first sensing condition is satisfied, it is considered that the light intensity changes, that is, the projection of the projection object is sensed, and the sensing condition may be, for example, an intensity threshold of light. The intensity threshold of light may be set with respect to an electric signal converted from a signal output by the light sensor, that is, determining is performed using the electric signal. When the electric signal is higher than or lower than or equal to the light intensity threshold, it is considered that the sensing condition is satisfied (it may be set to be "higher", "lower" or "equal to" according to actual needs).

There is at least one light sensing region, one light sensing region is provided with at least one light sensor, for example, the light source is the sun, when the sun shines on the projection object and a projection of the projection object is located in the light sensing region, the light sensor in the light sensing region may sense a light intensity change signal (since a shadow of the projection object is projected to the light sensing region, a light intensity in the light sensing region is decreased, thus causing change of an electrical signal), and a light sensing region that has sensed a light intensity change is the trigger region.

There may be one light sensing region or two or more light sensing regions. When there is one light sensing region, the light sensing region may correspond to one dimming function region, when light of the light sensing region is blocked by the projection object, a light sensor disposed in the light sensing region may have detected a light intensity change, and when a light intensity change signal is received by a dimming control device, the dimming control device may be triggered to transmit a drive signal to a corresponding dimming function region to adjust a light transmittance of the dimming function region, thereby achieving a purpose of automatic dimming. When one light sensing region corresponds to one incident direction, and the light sensing region corresponds to one dimming function region, sensing of light and adjustment of the dimming function region are more targeted, and more accurate photosensitivity and dimming may be achieved. For example, the photosensitive system is applied to a vehicle, when the dimming function region is disposed in a region of a driver seat windshield adjacent to a roof, it may be used as a dimmable sun visor, so that targeted sensing and dimming may be achieved, and the driver can be accurately protected from an influence of light without significantly changing a brightness inside the vehicle.

When there are two or more light sensing regions, each light sensing region may sense (or correspond to) one incident direction of a light source, as shown in FIG. 2, a semicircular light sensing plate is taken as an example, and four light sensing regions are disposed on the light sensing plate: a light sensing region 1, a light sensing region 2, a light sensing region 3 and a light sensing region 4. Among them, the light sensing region 1 corresponds to an incident direction 1, the light sensing region 2 corresponds to an incident direction 2, the light sensing region 3 corresponds to an incident direction 3, and the light sensing region 4 corresponds to an incident direction 4. There may be a plurality of dimming function regions, but there is no need for a one-to-one correspondence between a light sensing region and a dimming function region, and a correspondence relationship between the light sensing region and the dimming function region may be set as needed. For example, for a position with a high dimming requirement, one light sensing region may correspond to one dimming function region to achieve precise dimming; for a position with a low dimming requirement, one light sensing region may correspond to two or more dimming function regions. In this example, the dimming control device determines the trigger region according to the projection of the light source, and determines the corresponding dimming function region according to the trigger region, including: the dimming control device uses a light sensing region where a projection of the projection object is sensed as the trigger region, for example, as shown in FIG. 2, when the light sensing region where the projection is sensed is the light sensing region 3, the light sensing region 3 is the trigger region, and the dimming function region corresponding to the trigger region is a dimming function region corresponding to the trigger region where the projection is sensed. As described in the previous example, a dimming function region corresponding to the light sensing region 3 is the dimming function region corresponding to the trigger region. When one light sensing region corresponds to one incident direction and one light sensing region corresponds to two or more dimming function regions, a dimming range is larger. When the projection object is illuminated with light at a certain angle and light change is sensed in a preset light sensing region, light transmittances of the corresponding two or more dimming function regions may be simultaneously changed, and a brightness in a vehicle or indoor may be overall adjusted.

In some scenarios, for example, when there are two or more light sources or a current projection of a light source is located at two or more light sensing regions at the same time, the two or more light sensing regions may sense a change in light intensity. At this time, light intensities sensed by the two or more light sensing regions may be compared, and a light sensing region that has sensed a maximum light intensity may be used as the trigger region. Here, an implementation mode for comparing light intensities may be, for example, comparing intensities of electrical signals converted from output signals of the light sensors in the light sensing regions. A comparison operation described above may be implemented by a logic processor in the dimming control device. When there are two or more light sensors in one light sensing region, an average value of intensities of electric signals obtained by converting output signals of the two or more light sensors may be used as a light intensity sensed by the whole light sensing region.

In an exemplary embodiment, in order to achieve automatic dimming according to a light source height, in one light sensing region, along a projection direction of the projection object (the projection direction refers to a direction of the light source facing toward the projection object), the light sensing region may include two or more light sensing sub-regions, each light sensing sub-region is provided with a light sensor, and each light sensing sub-region corresponds to a light source height. Each light sensing sub-region may correspond to one dimming function region or two or more dimming function regions. When light emitted by a light source is incident on the light sensing plate, the higher a height of the light source, the greater an angle between the light source and the light sensing plate (that is, an angle between an intersection point between the light source and the light sensing plate and the light sensing plate), and the shorter a projection length of the projection object projected to the light sensing plate, and correspondingly, a projection can be sensed in fewer light sensing sub-regions; the lower a height of the light source, the smaller the angle between the light source and the light sensing plate, and the longer the projection length of the projection object projected to the light sensing plate, and correspondingly, a projection can be sensed in more light sensing sub-regions.

As shown in FIG. 3, for convenience of illustration, three light sensing sub-regions located in a same light sensing region are shown: a light sensing sub-region 1, a light sensing sub-region 2, and a light sensing sub-region 3. In the figure, three light source heights are taken as an example to show projections obtained with different light source heights. In the figure, a height of position 1 is higher than a height of position 2, which is higher than a height of position 3. For example, a light source is located at position 3, a projection length is shown in FIG. 3. It may be seen that the higher the position, the longer the projection.

In the present example, the dimming control device determines the trigger region according to the projection of the light source, and determines the corresponding dimming function region according to the trigger region, including: the dimming control device uses a light sensing sub-region that senses a projection of the projection object as the trigger region, and the dimming function region corresponding to the trigger region is a dimming function region corresponding to a light sensing sub-region representing a highest light source height in light sensing sub-regions that have sense the projection of the projection object. For example, in the example shown in FIG. 3, when the light source is located at the position 3, the light sensing sub-regions that sense the projection of the projection object include a light sensing sub-region 1, a light sensing sub-region 2, and a light sensing sub-region 3, at this time, the trigger region includes the light sensing sub-region 1, the light sensing sub-region 2, and the light sensing sub-region 3, and the dimming function region corresponding to the trigger region is a dimming function region corresponding to the light sensing sub-region 3. For another example, when the light source is located at position 2, the light sensing sub-regions that sense the projection of the projection object include the light sensing sub-region 1 and the light sensing sub-region 2, at this time, the trigger region includes the light sensing sub-region 1 and the light sensing sub-region 2, and the dimming function region corresponding to the trigger region is a dimming function region corresponding to the light sensing sub-region 2. For another example, when the light source is located at position 1, the light sensing sub-region that senses the projection of the projection object includes the light sensing sub-region 1, at this time, the trigger region includes the light sensing sub-region 1, and the dimming function region corresponding to the trigger region is a dimming function region corresponding to the light sensing sub-region 1. It may be seen that the higher the light source height, the smaller the area of the trigger region, and the lower the light source height, the larger the area of the trigger region.

In some working environments, there may be an interference. Still taking FIG. 3 as an example, when the light source is located at position 1 in FIG. 3, the projection of the projection object is located in the light sensing sub-region 1, that is, a light sensor of the light sensing sub-region 1 senses a light intensity change, but there may be another shielding object that causes an appearance of a projection also in the light sensing sub-region 3, that is, a light sensor of the light sensing sub-region 3 also senses a light intensity change, but there is no projection in the light sensing sub-region 2 at this time. The dimming control device is also configured to determine whether the projection is continuous after receiving the signal transmitted by the light sensor in the light sensing sub-region 3, that is, determine whether light sensors in the light sensing sub-region 2 and the light sensing sub-region 1 sense a signal of a light intensity change, and ignore the signal of the light sensor 3 when the determining result is discontinuity. The dimming control device may be configured to determine whether all other light sensing sub-regions between the current light sensing sub-region and the projection object sense a light intensity change when receiving a signal sensing a light intensity change transmitted by other light sensing sub-regions except a light sensing sub-region closest to the projection object, if yes, it is indicated that the signal transmitted by the current light sensing sub-region is valid, and if not, it is indicated the signal transmitted by the current light sensing sub-region is invalid. Only an effective signal is used to determine a trigger region and perform light sensing regulation. Through the above determining acts, an interference signal may be removed and the dimming function region can be prevented from being misadjusted.

At least one light sensor may be disposed within one light sensing region, two or more light sensors may be disposed within one light sensing region when an area of the light sensor region is relatively large, and it may be provided that as long as a preset quantity (for example, one or two or three) or more light sensors sense a light intensity change, it may be considered that the light intensity change is sensed by the light sensor region.

In an exemplary embodiment, the light sensor, as an optical sensor, may be a photosensitive element, such as a photoresistor. A resistance value of the photoresistor may change with a change in light intensity, and a voltage signal across two terminals of the photoresistor may be used as a signal with a change in light intensity.

In an exemplary embodiment, in order to avoid an interference, the dimming control device determines the trigger region according to the projection of the light source, including: when the dimming control device senses that a duration of the projection of the projection object satisfies a preset duration, a region (including a light sensing region sensing the projection of the projection object or a light sensing sub-region sensing the projection of the projection as previously described) where the projection of the projection object is sensed is determined as the trigger region. By considering an influence of time factor, false triggering of dimming function may be avoided. For example, when the photosensitive system and the dimming system are applied to a vehicle, when the vehicle passes through a tree-lined road, the light sensing region may frequently sense a change in light intensity, and the projection may be quickly switched between different light sensing regions (or light sensing sub-regions). By presetting a certain step time (i.e. the aforementioned preset duration), it is ensured that only when an output signal (or an electrical signal converted from the output signal) of the light sensor triggered by the projection remains stable for a preset duration, the dimming is triggered. That is to say, only when the projection in the light sensing region is fixed/does not fluctuate within the preset duration, the dimming is performed. For example, it is required that only when an electrical signal converted from an output signal of the light sensor (such as photosensitive material) remains constant (a floating range of, for example, ± 10% may be allowed) for n seconds, the dimming control device transmits a drive signal to the corresponding dimming function region to be adjusted. n is a positive integer greater than or equal to 1, n ∈ [3-10], for example, n = 5, and a value of n may be different according to different scenarios, it is merely an example herein but is not intended as a limitation on the present application. Exemplarily, the above-described operation may be implemented by a logic processor in the dimming control device, and a control of whether the preset duration is satisfied may be completed by a timer in the logic processor.

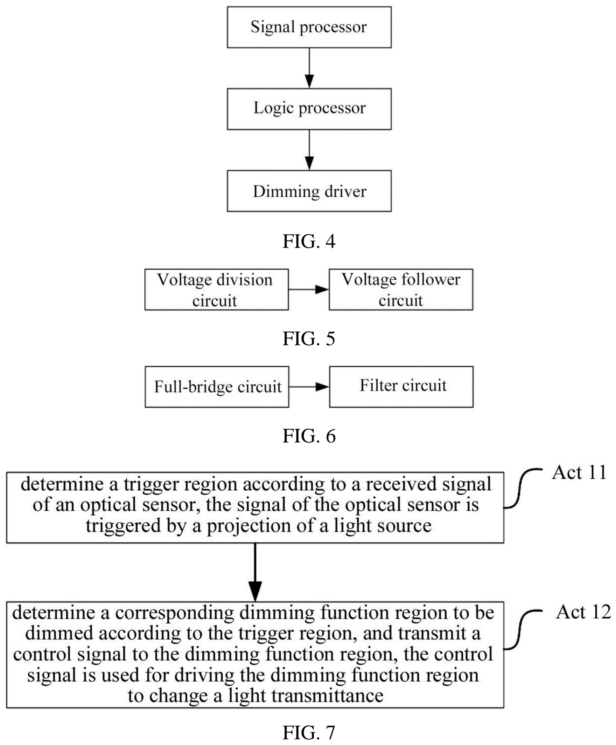

In an exemplary embodiment, as shown in FIG. 4, the dimming control device may include a signal processor, a logic processor, and a dimming driver.

The signal processor is connected with the light sensor in one-to-one correspondence and configured to process an output signal of the light sensor into an electrical signal that can be processed by the logic processor.

The logic processor is configured to determine a trigger region according to the received electrical signal output by the signal processor, determine a dimming function region to be adjusted according to the trigger region, and transmit a control signal to a dimming driver corresponding to the dimming function region to be adjusted.

The dimming driver is connected with the dimming function region in one-to-one correspondence, and is configured to transmit a drive signal to a corresponding dimming function region according to the control signal transmitted by the logic processor to change the light transmittance of the dimming function region.

In an exemplary embodiment, the signal processor is connected across the optical sensor, and determines whether the optical sensor has sensed a change in light intensity by sensing a change in a voltage across the optical sensor. Taking the light sensor being a photoresistor as an example, the signal processor may include a voltage division circuit configured to convert an output signal of the light sensor into a voltage signal. Optionally, the signal processor may further include a voltage follower circuit, as shown in FIG. 5, the voltage follower circuit may be connected after the voltage division circuit, and may play a role in isolating an interference between front and back stages. The voltage follower circuit may be implemented, for example, by an operational amplifier, or may be implemented by other existing voltage follower circuits. Optionally, the signal processor may further include a protection circuit to stabilize the signal processor and to protect it from noise interference.

In an exemplary embodiment, a corresponding relationship between the light sensing region (or the light sensing sub-region) and the light dimming function region may be stored in advance in the logic processor, and since the signal processor and the light sensor are connected in one-to-one correspondence, the logic processor may determine which light sensors have detected the light intensity change according to the signal processor that transmits the electric signal, that is, according to the received electric signal output by the signal processor, the light sensing region with a changed light intensity may be determined, that is, which light sensing regions or which light sensing sub-regions are projected with a shadow of the projection object, and thus the trigger region is determined, and then the dimming function region corresponding to the trigger region is determined, that is, light transmittances of which dimming function regions need to be adjusted, and a control signal is transmitted to the dimming driver corresponding to the dimming function region to be adjusted. The logic processor may be achieved, for example, by a micro control unit (MCU). Optionally, the logic processor may first convert the analog electrical signal output by the signal processor into a digital electrical signal, and then perform the above logic determination. After that, a signal transmitted by the logic processor to the dimming driver is a digital pulse signal (i.e., the aforementioned control signal).

The logic determination operation performed by the dimming control device described above is executed by the logic processor, for example, including but not limited to determination of a trigger region, comparison and determination of light intensity, determination of whether a signal is valid, determination of signal duration, etc., and which will not be repeated here.

In an exemplary embodiment, the logic processor may be also configured to set a correspondence relationship between the light sensing region and the dimming function region, for example, to set a quantity and/or a range of the dimming function regions corresponding to the light sensing regions. Providing for users with a convenience of setting the corresponding relationship between the light sensing region and the dimming function region, may expand an application range of the system, meet needs of different customers, and improve experience of users. For example, for a dimming window (such as a windshield window in a cab) that has different dimming function regions and can be controlled in partitions, different dimming function regions may be set to correspond to different light sensing regions.

In an exemplary embodiment, the logic processor may also set different working modes, the working modes include working conditions, and a working condition in each working mode may be set, and the working conditions in different modes are different or partially the same. Working conditions include, but are not limited to, one or more of the following:
a position of the light sensing region, for example, all the light sensing regions are enabled, or only part of the light sensing regions are enabled, and a signal transmitted by the light sensor in an unabled light sensing region may be regarded as an invalid signal;
a corresponding relationship between the light sensing region and the dimming function region;
a range of adjustable dimming function regions, for example, all dimming function regions may be adjusted, or some dimming function regions may be adjusted;
a mode for adjusting the light transmittance of the dimming function region, such as increasing or reducing the light transmittance, or a proportion or range for increasing the light transmittance, or a proportion or range for reducing the light transmittance.

The setting of the working mode may be set by the system or by the user. By providing the setting of the working mode, the solution can be applied to different scenarios and is more flexible.

In an exemplary embodiment, the working condition may further include a trigger condition, i.e. a condition that triggers the current working mode, whereby automatic switching of the working mode may be achieved. The trigger condition may be, for example, an external light intensity condition, for example, it is a daytime mode when the light intensity is higher than a preset condition intensity, and it is a night mode when the light intensity is lower than the preset condition intensity, and a working condition may be set as reducing the light transmittance in the daytime mode, and a working condition may be set as increasing the light transmittance in the night mode. In addition, the dimming function regions of the daytime mode and the night mode may be different,

For another example, the trigger condition may be that, all light sensing regions sense a change in light intensity, or all light sensing regions sense a change in light intensity and a difference between light intensity values of the plurality of light sensing regions is less than a preset light intensity difference. For example, a photosensitive system is applied to a vehicle, when a vehicle with photosensitive system enters a tunnel, all light sensing regions all sense a decrease in light intensity, and then it may automatically enter a tunnel mode, and the light transmittances of all dimming function regions in the vehicle window may be increased to adjust the light intensity in the vehicle as a whole.

In an exemplary embodiment, the dimming driver converts the digital pulse signal received from the logic processor into a sinusoidal wave signal (i.e., the aforementioned drive signal) capable of driving the dimming function region for dimming. The dimming driver includes a full-bridge circuit and a filter circuit connected with the full-bridge circuit, as shown in FIG. 6. The full-bridge circuit is configured to convert the digital pulse signal output by the logic processor into a sinusoidal pulse signal, and the filter circuit is configured to convert the sinusoidal pulse signal into a sinusoidal wave signal.

In an exemplary embodiment, the dimming driver adopted varies depending on the dimming window. The dimming window may be achieved by bonding a dimming function layer in a glass interlayer, and the dimming driver is used to drive the dimming function layer for dimming. Taking the dimming window being a liquid crystal dimming window as an example, the liquid crystal dimming window is to add a liquid crystal structure layer between two layers of glass, the liquid crystal structure layer includes a first electrode layer, a liquid crystal layer and a second electrode layer. By applying a voltage to the first electrode layer and the second electrode layer, liquid crystal molecules in the liquid crystal layer are arranged neatly, so that light can be transmitted freely, when the voltage between the first electrode layer and the second electrode layer is changed, an arrangement angle of liquid crystal molecules may be changed, thus a light transmittance can be controlled. When the dimming window is a liquid crystal dimming window, the dimming driver is configured to transmit an electric signal to the corresponding dimming function region, so as to change the voltage of the first electrode layer and the second electrode layer in a corresponding dimming function region, and then change the light transmittance of the dimming function region. By adopting the liquid crystal dimming window, a dark transmittance is low, and a drive voltage is between 18 and 24v, which is lower than a human body safety voltage of 36v, so it is safer and more reliable. In other embodiments, other types of dimming windows and corresponding dimming drivers may be employed.

One dimming window may include one or more dimming function regions, and each dimming function region may individually adjust the light transmittance.

Exemplarily, the dimming control device may be integrated in the light sensing plate, so that the entire photosensitive system, as a portable system, may be connected to another system with a dimming window at any time.

An embodiment of the present disclosure also provides a dimming system, as shown in FIG. 1, the dimming system includes the photosensitive system and the dimming window as described above, the dimming window includes at least one dimming function region, and the dimming function region is configured to change a light transmittance according to a drive signal transmitted by the dimming control device. The dimming window is, for example, a liquid crystal dimming window. The structure and working principle of the dimming system are described with reference to the aforementioned embodiments, which will not be repeatedly described here.

An embodiment of the present disclosure also provides a dimming method, which is applied to a logic processor and is used for controlling a dimming window, among them, the dimming window includes at least one dimming function region. The method is shown in FIG. 7, and includes the following acts.

In act 11, a trigger region is determined according to a received signal of an optical sensor, the signal of the optical sensor is triggered by a projection of a light source.

In act 12, a corresponding dimming function region to be dimmed is determined according to the trigger region, and a control signal is transmitted to the dimming function region, the control signal is used for driving the dimming function region to change a light transmittance.

In an exemplary embodiment, in the act 11, the trigger region may be determined in the following manner: a light sensing region where the optical sensor transmitting a signal is located is determined, and the light sensing region is determined as the trigger region. In this example, one light sensing region corresponds to one incident direction of a light source, and one light sensing region corresponds to one dimming function region or two or more dimming function regions. Accordingly, in the act 12, the corresponding dimming function region to be dimmed may be determined in the following manner: a dimming function region corresponding to the light sensing region is used as the dimming function region to be dimmed corresponding to the trigger region.

In an exemplary embodiment, in the act 11, the trigger region may be determined in the following manner: a light sensing sub-region where the optical sensor transmitting a signal is located is determined, and all light sensing sub-regions are determined as the trigger region. In this example, one light sensing sub-region corresponds to a light source height, and one light sensing sub-region corresponds to one dimming function region or two or more dimming function regions. Accordingly, in the act 12, the corresponding dimming function region to be dimmed may be determined in the following manner: a dimming function region corresponding to a light sensing sub-region representing a highest light source height in the light sensing sub-regions is used as the dimming function region to be dimmed corresponding to the trigger region.

In an exemplary embodiment, when the trigger region is determined, whether a signal transmitted by the light sensor is maintained for a preset duration may be determined, that the signal is valid is determined if the signal is maintained for the preset duration, and that the signal is invalid is determined if the signal is not maintained for the preset duration. In act 11, determining the trigger region according to the received signal of the optical sensor means determining the trigger region according to a received effective signal of the optical sensor, that is, the optical sensor that transmits the signal refers to an optical sensor that transmits the effective signal.

In an exemplary embodiment, transmitting the drive signal to the dimming function region to change the light transmittance of the dimming function region, includes: transmitting a drive signal to the dimming function region to reduce the light transmittance of the dimming function region; or transmitting a drive signal to the dimming function region and one dimming function region or two or more dimming function regions adjacent to the dimming function region to reduce the light transmittance, and enabling the light transmittance of the dimming function region to be lower than a light transmittance of the one dimming function region or the two or more dimming function regions adjacent to the dimming function region.

An implementation of the method may refer to the description of the above embodiments, which will not be repeatedly described herein.

This embodiment proposes an automatic light sensing and partition dimming system solution. When used in a passenger vehicle system, the dimming window is used to function replace the sun visor on a traditional passenger vehicle. Through this solution, an incident direction of a light source (sunlight) may be sensed, and a dimming function region at a corresponding position may be driven through logical processing, so as to achieve an effect of reducing the transmittance of incident light in this direction and avoid an interference of strong ambient light with a driver.

Hereinafter, the above system will be described by way of an application example. In the present application example, the dimming system described above is applied to a vehicle, and the dimming window is a dimming vehicle window, which may avoid an interference of strong ambient light with a driver.

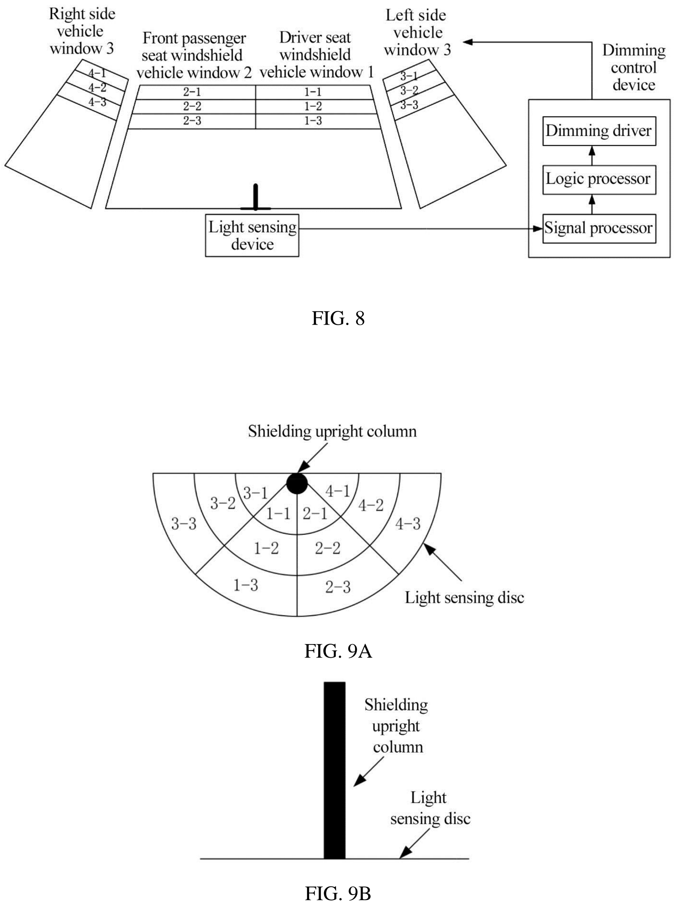

As shown in FIG. 8, a main body portion of the system of the present example includes a light sensing device, a dimming control device, and a dimming vehicle window. In this example, the dimming vehicle window includes four sections: a front windshield vehicle window (including a driver seat windshield vehicle window 1, a front passenger seat windshield vehicle window 2), a left side vehicle window 3, and a right side vehicle window 4. The "left" and "right" described herein are dependent on a driver's perspective. Each dimming vehicle window includes a plurality of dimming function regions that may be independently driven according to a requirement of partition dimming. In this example, taking that each section is divided into three layers of partitions as an example, and there are a total of 12 dimming function regions (referred to as dimming partitions, or partitions) that may be driven independently. In this example, taking that each partition is divided in a horizontal direction as an example, and as shown in FIG. 8, the driver seat windshield vehicle window 1 includes a partition 1-1, a partition 1-2, and a partition 1-3, the front passenger seat windshield vehicle window 2 includes a partition 2-1, a partition 2-2, and a partition 2-3, the left side vehicle window 3 includes a partition 3-1, a partition 3-2, and a partition 3-3, and the right side vehicle window 4 includes a partition 4-1, a partition 4-2, and a partition 4-3. This is merely an example, and the present disclosure has no restriction on the quantity, positions, and areas of the dimming vehicle windows, as well as the quantity of partitions and the mode of partitioning, which may be adjusted according to actual needs, for example, a section of the driver seat windshield vehicle window may be divided into more partitions. For example, a division mode for partitions may not be a horizontal division, but an oblique division, etc.

In the present example, the light sensing device may be implemented by a design shown in FIGs. 9A and 9B. In this example, the light sensing device includes a shielding upright column (i.e., the aforementioned projection object) and a light sensing disc (i.e., the aforementioned light sensing plate). In this example, the light sensing disc is arranged in a circumferential direction according to a direction for sensing light, and partitioning is completed in a radial direction according to a resolution for sensing light. In other embodiments, a layout of the light sensing disc may be adjusted according to an actual situation. In FIG. 9A, the light sensing disc is divided into four regions (region 1, region 2, region 3 and region 4) in the circumferential direction, and each region is divided into three sub-regions (sub-region 1, sub-region 2 and sub-region 3) in the radial direction, resulting in a total of 12 light sensing sub-regions (represented by a region code-sub-region code in the figure). In this example, in order to facilitate understanding, it is designed that each light sensing sub-region corresponds to one dimming partition. In other embodiments, the light sensing sub-region may not correspond to the dimming partition in one-to-one correspondence, for example, eight light sensing regions may be set, and each light sensing region may be set with 2-5 sub-regions, so a plurality of light sensing sub-regions may be set to correspond to one dimming partition. Each light sensing sub-region is each provided with one photosensitive element for obtaining an illumination intensity of the sub-region. As shown in FIG. 9A, the shielding upright column may be positioned close to a circle center of the light sensing disc to block sunlight, and when a shadow of the shielding upright column is projected on the light sensing disc, an intensity of sunlight received by some light sensing sub-regions which are blocked by the shadow is greatly weakened. A current sun illumination direction may be determined according to a position blocked by the shadow, for example, according to which light sensing region (region 1, region 2, region 3 or region 4) the shadow is located. A current sun altitude may be determined according to a length of the shadow along a projection direction, for example, according to how many light sensing sub-regions (region 1, region 2 and region 3) the shadow is located, and the more the light sensing sub-regions blocked by the shadow, the lower the sun altitude. For example, when it is sensed that light intensities in sub-region 2-1, sub-region 2-2, and sub-region 2-3 are lower than that in other regions, it may be determined that an incident direction of sunlight is left front and the sun altitude is relatively low; when it is sensed that a light intensity in sub-region 1-1 is lower than that in other regions, it may be determined that the incident direction of sunlight is the right front and the sun altitude is relatively high. FIG. 9A is only one example of a partition solution of the light sensing disc, and the present disclosure has no restrictions on the quantity, partitioning mode, and the like of the light sensing sub-regions, which may be adjusted according to actual needs. If a higher sensing accuracy is needed, a light sensing disc with a larger quantity of sub-regions may be adopted.

When the system of the present example is applied to a driving cab, the light sensing device may be mounted on a front side of a vehicle body, for example, at a bottom of a vehicle's front windshield. The shielding upright column faces a front direction of a vehicle. In this way, the determination of the incident direction of sunlight may be better completed according to photosensitive values fed back by photosensitive elements in the plurality of light sensing sub-regions. Exemplarily, the light sensing device may be portable or detachable, and the light sensing device may be connected to other existing systems for light sensing. In different application scenarios, an installation position of the light sensing device is not limited thereto, for example, the light sensing device may be provided on a rear side of a vehicle body, and a side of the shielding upright column faces a vehicle backward direction. In this way, according to the same principle mentioned above, sunlight incident from a rear of the vehicle may be detected, and a light transmittance of a rear vehicle window may be adjusted to reduce a transmittance of strong light incident from the rear. In other scenarios, the installation position and orientation of the light sensing device may also change to some extent, such as the left side, right side, or even above of a direction of the front of the vehicle, etc., which will not be repeated here.

In this example, it is illustrated by taking the light sensing element being a photoresistor as an example. A photosensitive characteristic of a usual photoresistor is as follows: when the light intensity increases, the resistance value decreases. The resistance value of the photoresistor is used as an input signal of a signal processor in the dimming control device, and the signal processor converts it into an electrical signal that may be recognized by a logic processor.

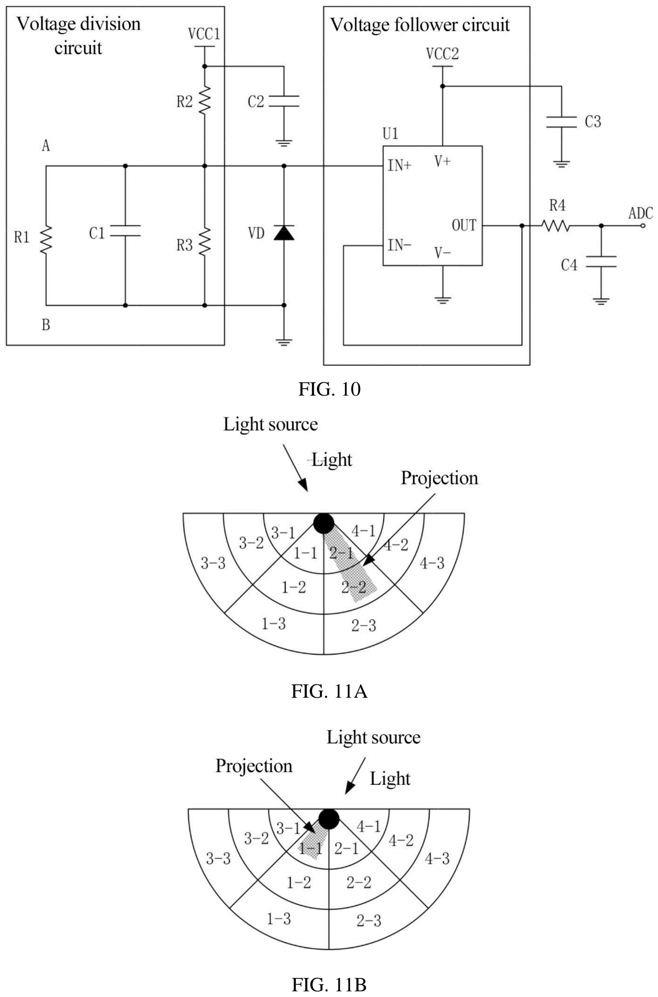

FIG. 10 is a circuit diagram of a signal processor. In actual use, at least one photoresistor is disposed in each light sensing sub-region, and wires led out from both terminals of each photoresistor are connected to one signal processor, that is, between points A and B of the signal processor shown in FIG. 10. That is, a quantity of photoresistors corresponds to a quantity of signal processors in one-to-one correspondence.

The signal processor shown in FIG. 10 mainly includes a voltage division circuit and a voltage follower circuit. The photoresistor R1, a resistor R2, and a resistor R3 constitute a voltage division circuit, among them, the photoresistor R1 is connected in parallel with the resistor R3, and the resistor R3 is connected in series with the parallel circuit. In this example, the voltage follower circuit is achieved by an operational amplifier. As shown in FIG. 10, U1 is an operational amplifier that constitutes a voltage follower circuit, which mainly plays a role of isolating a previous stage and a next stage and reducing an output impedance. A forward input terminal of the operational amplifier U1 is connected with an output terminal of the voltage division circuit, and a reverse input terminal of the operational amplifier is connected with an output terminal. The signal processor further includes a protection circuit, a capacitor C1 connected in parallel with the photoresistor R1 functions to form a filter circuit with the help of an impedance on a wire of the photoresistor to achieve filtering of high-frequency noise interference introduced from the photoresistor and the wire; a capacitor C2 and a capacitor C3 are power supply decoupling capacitors to avoid introducing noise interference; VD is a voltage stabilizing diode to avoid damage caused by overvoltage of a next-stage circuit due to an abnormality of the previous-stage voltage division circuit; R4 is a current limiting resistor to avoid overcurrent damage in the next stage; C4 is a filter capacitor, which is used to filter noise interference of the previous-stage circuit.

Taking a light resistance of the photoresistor being 1kQ and a dark resistance being 150kΩ as an example, a resistance change from light to dark may be converted into an analog signal with a voltage value of about 2.1 V ~ 3 V through the circuit shown in FIG. 10, the analog signal may be converted into a digital signal by an analog-to-digital conversion (ADC) circuit of the logic processor, which serves as a parameter-basis for controlling the dimming driver.

In this example, it is illustrated by taking the logic processor using an MCU as an example, and the MCU includes an ADC module. One implementation of control logic of a logic processor may be simply implemented by a corresponding relationship between a light sensing sub-region of the light sensing device and a dimming function partition of the dimming vehicle window. The logic processor is connected with all the signal processors, and may determine light intensities of which light sensing sub-regions change according to the signal transmitted by the signal processor, thereby determining which corresponding dimming function regions are adjusted, and transmits signals to corresponding dimming drivers. For example, if an illumination of a region constituted by light sensing sub-regions 2-1, 2-2, and 2-3 is reduced, it means that the incident direction of light is a front left, as shown in FIG. 11A, and the illumination height is relatively low. At this time, the dimming function partitions 2-1, 2-2, and 2-3 are correspondingly driven to achieve illumination shielding. For another example, if an illumination of the light sensing sub-region 1-1 is reduced, it means that the incident direction of light is a right front, as shown in FIG. 11B, and the illumination height is relatively high. At this time, the dimming function partition 1-1 may be driven correspondingly to achieve illumination shielding.

For the driver seat windshield vehicle window, in order to obtain a better shielding effect, when a light transmittance of a dimming function partition 1-1 is adjusted, a light transmittance of a dimming function partition 1-2 or light transmittances of the dimming function partitions 1-2 and 1-3 may be adjusted correspondingly, but a light transmittance may be controlled to gradually increase, that is, the light transmittance of the dimming function partition 1-2 is higher than that of the dimming function partition 1-1, and the light transmittance of the dimming function partition 1-3 is higher than that of the dimming function partition 1-2. That is, in addition to adjusting light transmittance of the dimming function region corresponding to the light sensing region, the light transmittance of other one dimming function region or two or more dimming function regions adjacent to the dimming function region may also be adjusted.

In an exemplary embodiment, the light transmittance may also be controlled, for example, when the light intensity is higher, the light transmittance is lower, and when the light intensity is lower, the light transmittance is higher. The illumination intensity may be determined according to an output of a photosensitive element.

In an exemplary embodiment, the logic processor may be connected to a vehicle communication bus (such as a Local Interconnect Network (LIN) bus or a Controller Area Network (CAN) bus) by connecting externally an interface unit (such as a chip that can be used as an interface) to achieve a connection with a vehicle system, and may perform a full communication (including but not limited to obtaining a working state of the logic processor, and transmitting a control command to the logic processor) with the logic processor through this path (as in the foregoing embodiments, settings of the logic processor by the user may be implemented through this path).

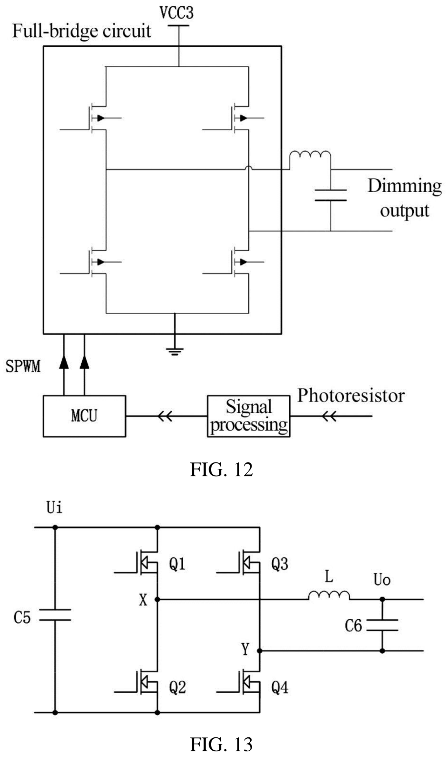

As described above, the dimming driver may be selected according to a dimming mode of the dimming function layer in the dimming window. Taking the dimming functional layer being a liquid crystal structure layer as an example, an AC drive voltage needs to be output, and sine wave pulse width modulation (SPWM) and filtering shown in FIG. 12 may be adopted. As shown in FIG. 12, a resistance value of the photoresistor is converted into an analog voltage signal through the signal processor, input to the ADC module of the MCU, converted into a digital signal, and then the above-mentioned logic processing is carried out by the MCU. A digital signal output by the MCU is an SPWM wave, a full-bridge circuit is driven through the SPWM wave, then filtering is performed, thus an AC drive signal with an adjustable amplitude may be output, the AC drive signal is a drive signal for the dimming function layer, and a purpose that the dimming control device drives a corresponding dimming partition is achieved. In the present example, a quantity of drive signals output corresponds to a quantity of dimming functional layer partitions in one-to-one correspondence. In addition to the adoption of the SPWM wave filtering, in other embodiments, other existing well-established solutions may also be adopted to output a sinusoidal drive signal.

FIG. 13 is a circuit diagram of a SPWM wave driving a full-bridge circuit to generate a sinusoidal drive signal. As shown in the figure, the full-bridge circuit consists of an X (left) arm and a Y (right) arm, Ui is an input voltage and Uo is an output voltage. There are two NMOS transistors on each bridge arm, which are respectively called an H (high-side MOS) transistor and an L (low-side MOS) transistor, among them, an X-arm H transistor (hereinafter referred to as XH) is a transistor Q1, an X-arm L transistor (hereinafter referred to as XL) is a transistor Q2, a Y-arm H transistor (hereinafter referred to as YH) is a transistor Q3, and a Y-arm L transistor (hereinafter referred to as YL) is a transistor Q4. Because liquid crystal dimming glass may be regarded as a capacitive load, when XH and YL are turned on at the same time, a voltage across a load capacitance increases positively; when XL is turned on, a voltage across the load capacitor decreases. By adjusting XH and YL, a time period for which XL is turned on, a voltage value across the load capacitor may be adjusted, and vice versa. In a positive half cycle of a sin, Q3 (that is, BH) is turned on, Q4 (that is, BL) is turned off, and a full-bridge output follows Q2; in a negative half cycle of the sin, Q1 (that is, AH) is turned on, Q2 (that is, AL) is turned off, and an output of the full-bridge is a negative value of Q3. Waveforms of control signals of various MOS transistors and the output voltage of the full-bridge circuit in a sine wave outputting process may be shown in FIG. 12. The full-bridge circuit may also include a filter circuit 1 located at an input terminal and a filter circuit 2 located at an output terminal, among them, the filter circuit 1 includes a capacitor C5, and the filter circuit 2 is an LC circuit, which includes a capacitor C6 connected in parallel with the output terminal and an inductor L connected to an output port.

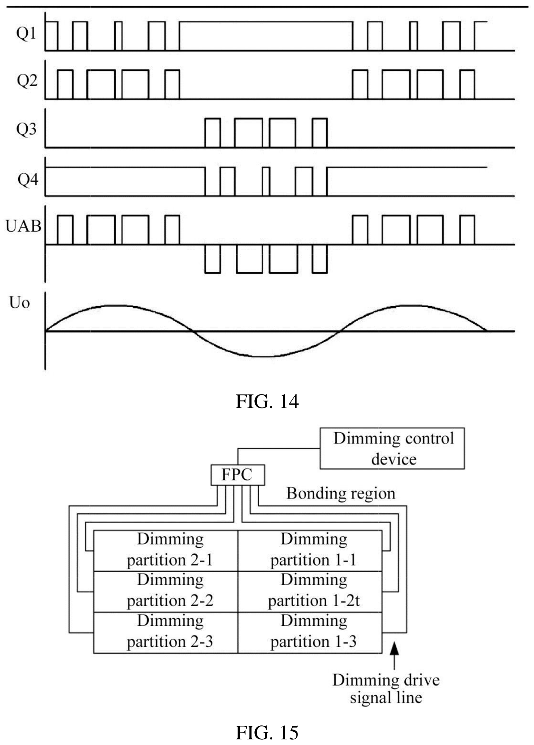

Taking a dimming window achieved by bonding a liquid crystal dimming function layer in a vehicle window glass interlayer as an example, dimming pixel points on the dimming function layer may be divided into several parts according to planned dimming partitions. FIG. 15 is an example of a connection relationship between a front windshield vehicle window and a dimming drive device. As shown in the figure, a dimming drive signal line is led out separately from each dimming partition (in FIG. 15, only one drive signal line is used for illustration to avoid complicated illustration), they are summarized to a bonding region through an edge trace region of the dimming function layer, and then the drive signal line of each dimming partition is connected with the dimming driver in the dimming control device through the flexible printed circuit board (FPC). The output signal of the dimming driver is received so that the dimming function layer is driven by the dimming driver. FIG. 14 is illustrated by only taking a front windshield vehicle window as an example, and connection of other vehicle windows may be performed by reference. FIG. 15 is merely an explanation for the connection relationship of the dimming partitions in FIG. 8, but is not intended to limit a dimming area, a quantity of partitions, a dimming position, and a division mode.

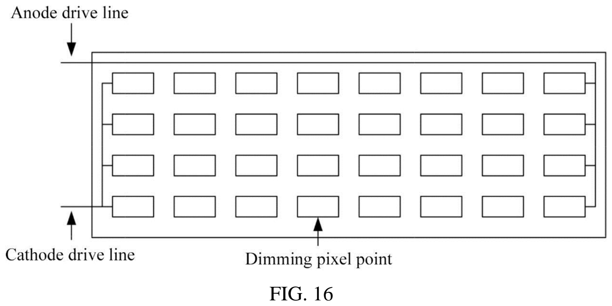

FIG. 16 is a schematic diagram of connection of drive signal lines of one dimming partition, and drive signal lines led out from each dimming section include an anode drive line (a first electrode drive line) and a cathode drive line (a second electrode drive line). The leading-out modes of the drive signal line should be different depending on an operation and process principle of the dimming functional layer. FIG. 16 is only an example of the liquid crystal dimming window. In the example shown in FIG. 16, since one dimming partition is dimmed independently, in the dimming partition, dimming pixel points of a same row are driven in series to form a dimming pixel group, and dimming pixel groups of different rows are driven in parallel, thereby achieving the purpose of uniformly driving dimming pixel points of a same dimming partition.

In this embodiment, the light sensing device is used to determine an incident direction and an intensity of sunlight, and then a corresponding logic processing is completed by the dimming drive device, a dimming glass in a corresponding direction is driven, a transmittance of sunlight is reduced, and partition automatic-dimming is achieved for sunlight in different incident directions. When applied to a scenario of a passenger vehicle, it may reduce an effect of external strong light on a driver. In this embodiment, dimming is completely automatic, and for a change of a light shielding demand due to a change of direction and an environment, adjustment by a driver through manual operation is not needed. In addition, the shading solution of partition may, on the one hand, solve the shading demand, and on the other hand, it may preserve a driver's field of view to a greater extent.

It is illustrated by taking that the photosensitive system and the dimming system are applied to a vehicle window as an example. In other embodiments, the photosensitive system and the dimming system may be used to adjust a light transmittance of a sunroof of the vehicle, thereby achieving automatic adjustment of the light transmittance of the sunroof. It has a good application prospect for a panoramic sunroof. The photosensitive device may still be disposed under a front windshield, or may be disposed on a roof of a vehicle, for example, an antenna on a top of the vehicle may be used as the projection object.

In an exemplary embodiment, embodiments in the present disclosure further provide a non-volatile computer-readable storage medium having stored thereon a computer program executable on a processor; the computer program is executed by the processor to implement the acts of the aforementioned dimming method.

Those of ordinary skills in the art may understand that all or some of acts in the methods disclosed above, systems, functional modules or units in apparatuses may be implemented as software, firmware, hardware, and an appropriate combination thereof. In a hardware implementation, division of the function modules/units mentioned in the above description is not always corresponding to division of physical components. For example, a physical component may have multiple functions, or a function or an act may be executed by several physical components in cooperation. Some components or all components may be implemented as software executed by a processor such as a digital signal processor or a microprocessor, or implemented as hardware, or implemented as an integrated circuit such as an application specific integrated circuit. Such software may be distributed on a computer readable medium, and the computer readable medium may include a computer storage medium (or a non-transitory medium) and a communication medium (or a transitory medium). As known to those of ordinary skills in the art, a term computer storage medium includes volatile and nonvolatile, and removable and irremovable media implemented in any method or technology for storing information (for example, a computer readable instruction, a data structure, a program module, or other data). The computer storage medium includes, but is not limited to, a Random Access Memory (RAM), a Read-Only Memory (ROM), an Electrically Erasable Programmable ROM (EEPROM), a flash memory or other memory technologies, a Compact Disc Read-Only Memory (CD-ROM), a Digital Video Disk (DVD) or other optical discs, a cassette, a magnetic tape, a disk memory or other magnetic storage devices, or any other medium configurable to store expected information and accessible by a computer. In addition, it is known to those of ordinary skill in the art that the communication medium usually includes a computer readable instruction, a data structure, a program module, or other data in a modulated data signal of, such as, a carrier wave or another transmission mechanism, and may include any information delivery medium.

Although implementation modes of the present disclosure are disclosed above, contents described are only implementation modes used for ease of understanding of the present disclosure, but not intended to limit the present disclosure. Any of those skilled in the art of the present disclosure may make any modification and variation in form and details of implementation without departing from the essence and scope of the present disclosure. However, the patent protection scope of the present disclosure should be subject to the scope defined in the appended claims.

## Claims

1. A photosensitive system, applied to a dimming window, wherein the dimming window comprises at least one dimming function region, the photosensitive system comprises a light sensing device and a dimming control device, the dimming control device is configured to be connected with the dimming window; wherein
the light sensing device is configured to sense a projection of a light source; and
the dimming control device is configured to determine a trigger region according to the projection of the light source, determine a corresponding dimming function region according to the trigger region, and transmit a drive signal to the dimming function region to change a light transmittance of the dimming function region.

2. The photosensitive system according to claim 1, wherein,
sensing, by the light sensing device, the projection of the light source, comprises: sensing, by the light sensing device, an incident direction of the light source relative to the light sensing device according to the projection of the light source.

3. The photosensitive system according to claim 1 or 2, wherein the light sensing device comprises a projection object and a light sensing plate, a light sensing region is disposed on the light sensing plate, a light sensor is disposed in the light sensing region, the projection object is configured such that a projection is capable of being obtained under illumination of the light source, and the light sensing region is configured to sense the projection of the projection object.

4. The photosensitive system according to claim 3, wherein there are two or more light sensing regions, each light sensing region corresponds to one incident direction of a light source, and each light sensing region corresponds to one dimming function region or two or more dimming function regions;
determining, by the dimming control device, the trigger region according to the projection of the light source, and determining the corresponding dimming function region according to the trigger region, comprises: using, by the dimming control device, a light sensing region that has sensed a projection of the projection object as the trigger region, and the dimming function region corresponding to the trigger region is a dimming function region corresponding to the light sensing region that has sensed the projection of the projection object.

5. The photosensitive system according to claim 3, wherein one light sensing region comprises a plurality of light sensing sub-regions, and the light sensor being disposed in the light sensing region comprises: a light sensor being disposed in each light sensing sub-region, wherein each light sensing sub-region corresponds to a light source height, each light sensing sub-region corresponds to one dimming function region or two or more dimming function regions; and
determining, by the dimming control device, the trigger region according to the projection of the light source, and determining the corresponding dimming function region according to the trigger region, comprises: using, by the dimming control device, a light sensing sub-region that has sensed a projection of the projection object as the trigger region, and the dimming function region corresponding to the trigger region is a dimming function region corresponding to a light sensing sub-region representing a highest light source height in light sensing sub-regions that have sensed the projection of the projection object.

6. The photosensitive system according to claim 4 or 5, wherein,
determining, by the dimming control device, the trigger region according to the projection of the light source, comprises: determining a region that has sensed the projection of the projection object as the trigger region when a duration for which the projection of the projection object is sensed satisfies a preset duration.

7. The photosensitive system according to claim 3, wherein the dimming control device comprises a signal processor, a logic processor, and a dimming driver, wherein
the signal processor is connected with the light sensor in one-to-one correspondence and configured to process an output signal of the light sensor into an electrical signal that is capable of being processed by the logic processor;
the logic processor is configured to determine a trigger region according to a received electrical signal output by the signal processor, determine a dimming function region to be adjusted according to the trigger region, and transmit a control signal to a dimming driver corresponding to the dimming function region to be adjusted; and
the dimming driver is connected with the dimming function region in one-to-one correspondence, and is configured to transmit a drive signal to a corresponding dimming function region according to the control signal transmitted by the logic processor to change the light transmittance of the dimming function region.

8. The photosensitive system according to claim 7, wherein the signal processor comprises a voltage division circuit and a voltage follower circuit connected with the voltage division circuit, the voltage division circuit is configured to convert an output signal of the light sensor into a voltage signal, and the voltage follower circuit is configured to isolate an interference between front and back stages.

9. The photosensitive system according to claim 7, wherein
the logic processor is further configured to set different working modes, the working modes comprise working conditions, working conditions in different modes are different or partially same, and the working conditions comprise but are not limited to: a position of the light sensing region, a corresponding relationship between the light sensing region and the dimming function region, an adjustable range of the dimming function region, and an adjustment mode of the light transmittance of the dimming function region.

10. The photosensitive system according to claim 7, wherein the dimming driver comprises a full-bridge circuit and a filter circuit connected with the full-bridge circuit, the full-bridge circuit is configured to convert a digital pulse signal output by the logic processor into a sinusoidal pulse signal, and the filter circuit is configured to convert the sinusoidal pulse signal into a sinusoidal wave signal for driving the dimming function region.

11. The photosensitive system according to claim 3, wherein,
the light sensing region is distributed in a circumferential direction according to a direction for sensing a light source, and the projection object is disposed at a circle center position of the light sensing region.

12. The photosensitive system according to claim 1, wherein,
when the photosensitive system is applied to a vehicle-mounted dimming window, the light sensing device is disposed at a bottom of a front windshield of a vehicle.

13. A dimming system, comprising the photosensitive system according to any one of claims 1 to 12 and a dimming window, wherein the dimming window comprises at least one dimming function region, and the dimming function region is configured to change a light transmittance according to a drive signal transmitted by a dimming control device.

14. The dimming system according to claim 13, wherein the dimming window is a liquid crystal dimming window.

15. A light sensing device, applied to a photosensitive system, wherein the light sensing device comprises a projection object and a light sensing plate, a light sensing region is disposed on the light sensing plate, a light sensor is disposed in the light sensing region, the projection object is configured such that a projection is capable of being obtained under illumination of the light source, and the light sensing region is configured to sense the projection of the projection object.

16. A dimming method, applied to a logic processor, for controlling a dimming window, wherein the dimming window comprises at least one dimming function region, and the method comprises:
determining a trigger region according to a received signal of an optical sensor, wherein the signal of the optical sensor is triggered by a projection of a light source; and
determining a corresponding dimming function region to be dimmed according to the trigger region, and transmitting a control signal to the dimming function region, wherein the control signal is used for driving the dimming function region to change a light transmittance.

17. The method according to claim 16, wherein,
determining the trigger region according to the received signal of the optical sensor comprises: determining a light sensing region where an optical sensor transmitting a signal is located, determining the light sensing region as the trigger region, wherein one light sensing region corresponds to one incident direction of a light source, and one light sensing region corresponds to one dimming function region or two or more dimming function regions; and
determining the corresponding dimming function region to be dimmed according to the trigger region comprises: using a dimming function region corresponding to the light sensing region as the dimming function region to be dimmed corresponding to the trigger region.

18. The method according to claim 16, wherein,
determining the trigger region according to the received signal of the optical sensor comprises: determining a light sensing sub-region where an optical sensor transmitting a signal is located, determining all light sensing sub-regions as the trigger region, wherein one light sensing sub-region corresponds to a light source height, and one light sensing sub-region corresponds to one dimming function region or two or more dimming function regions; and
determining the corresponding dimming function region to be dimmed according to the trigger region comprises: using a dimming function region corresponding to a light sensing sub-region representing a highest light source height in the light sensing sub-regions as the dimming function region to be dimmed corresponding to the trigger region.

19. The method according to claim 17 or 18, further comprising:
when determining the trigger region, determining whether a signal transmitted by a light sensor is maintained for a preset duration, and determining that the signal is valid if the signal is maintained for the preset duration and determining that the signal is invalid if the signal is not maintained for the preset duration;
wherein the optical sensor transmitting the signal refers to an optical sensor that transmits an effective signal.

20. The method according to any one of claims 16 to 18, wherein,
transmitting the drive signal to the dimming function region to change the light transmittance of the dimming function region, comprises: transmitting a drive signal to the dimming function region to reduce the light transmittance of the dimming function region; or transmitting a drive signal to the dimming function region and one dimming function region or two or more dimming function regions adjacent to the dimming function region to reduce the light transmittance, and enabling the light transmittance of the dimming function region to be lower than a light transmittance of the one dimming function region or the two or more dimming function regions adjacent to the dimming function region.

21. A computer-readable storage medium, storing a computer program executable on a processor, wherein when the computer program is executed by the processor, acts of the dimming method according to any one of claims 16 to 20 are implemented.
